# EUROPEAN PATENT APPLICATION

(11) **EP 3 203 702 A1**
(43) Date of publication of application: **09.08.2017**
(21) Application number: 16275018.6
(22) Date of filing: 04.02.2016
(51) Int. Cl.: H04L 29/06, G06F 13/42

(54) **A DATA DIODE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Disclosed is a data diode, arranged to permit a flow of data in one direction only, from a transmitter to a receiver, comprising: a data path, comprising an optical emitter and a photoreceptor, wherein data from the transmitter is used to energise the optical emitter to create an optical signal and the photoreceptor is arranged to generate an electrical signal in response to the optical signal, whereby the generated electrical signal is arranged to be passed to the receiver; and first and second power supplies, whereby the first and second power supplies are isolated from each other, the first power supply is arranged to supply a receive portion of the data diode and the second power supply arranged to supply a transmit portion of the data diode.

## Description

A data diode is a device which facilitates a unidirectional flow of information. Such devices are used to enforce one-way communication between systems or networks having differing security classifications, for instance. The security classifications may be defined in terms of commercial confidentiality, defence security or any instance where data from a higher classification system should not flow to, or contaminate, a lower classification system.

A problem with existing data diode solutions is that they are often reliant on embedded software, which itself is a security risk, since the software itself may be prone to attack or infiltration and this could compromise the entire device, allowing data to flow contrary to the user's intention. Existing data diodes can also be prohibitively expensive, especially those which are certified to a military standard. There therefore exists a need for a simple, inexpensive data diode.

According to the present invention there is provided an apparatus and method as set forth in the appended claims. Other features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows a multi-network configuration; and
Figure 2 shows a detailed schematic of a data diode according to an embodiment of the invention.

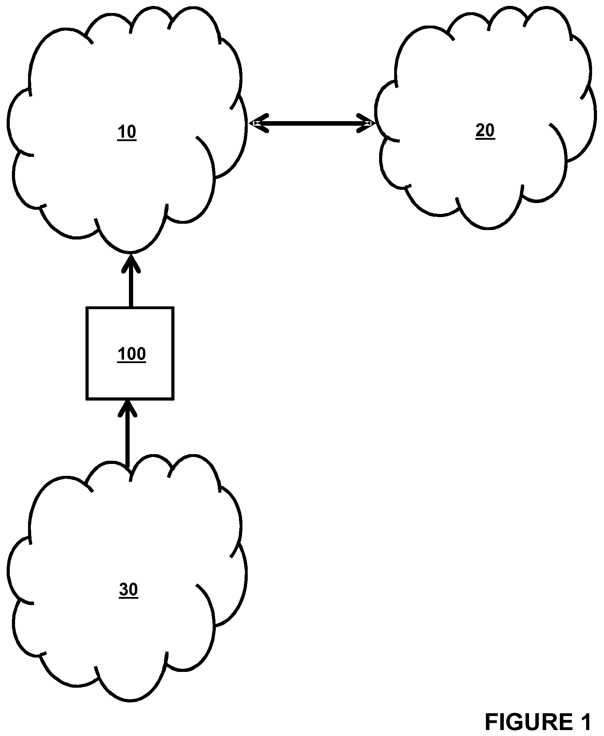

Figure 1 shows a multi-network configuration, comprising three distinct but interconnected networks, 10, 20, 30. Networks 10 and 20 are of a higher classification than network 30, which is of a lower classification. Networks 10 and 20 trust each other and are able to communicate freely in a bidirectional manner, as shown in Figure 1. Network 30 is of a lower classification and is not permitted to communicate freely with network 10. However, network 30 is required to transmit data to network 10 in a manner which does not permit higher classification data flow in the opposite direction (i.e. from the higher to the lower classification network).

Such a situation may arise in a secure network, where the secure network is required to receive data from a lower classification network, wherein the data may comprise environmental status information or other non-classified data.

Connected between networks 10 and 30 is a data diode 100, which is a physical device via which networks 10 and 30 are interconnected and which permits data to flow in only a single direction i.e. from the lower classification network 30 to the higher classification network 10.

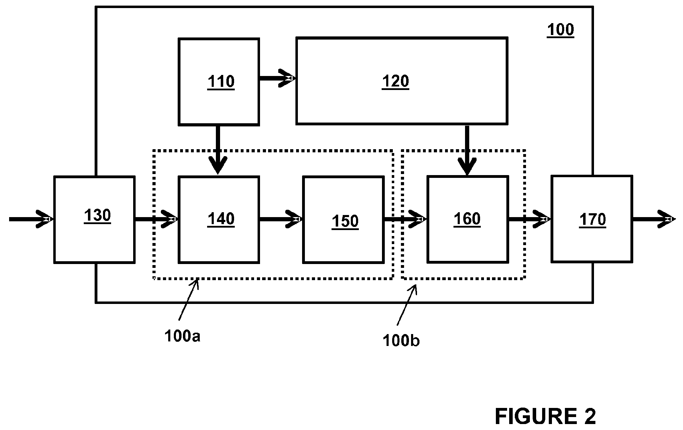

Figure 2 shows a detailed schematic of the data diode 100 according to an embodiment of the present invention.

The data diode 100 is operable in a serial data system, whereby the transmitting network is connected at serial data input 130 and the receiving network is connected to serial data output 170. Note that in the embodiments discussed herein, data is always transmitted from a lower classification network to a higher classification network, but it is possible to configure this in the opposite direction, should that be necessary. It is also possible to connect two networks of equal classification, whereby one is not permitted to receive data from the other. The skilled person will readily appreciate the different scenarios which would benefit from a data diode according to an embodiment of the invention.

In the specific embodiment shown in Figure 2, the serial data communication standard in use is RS485, but other serial data may also benefit from embodiments of the invention.

Power is derived from a suitable power system, such as 24V DC system, which may be provided as standard on many vessels, for instance. The power input is supplied to power conversion module 110, where, using a switching regulator, it is converted to 12V DC for use in other parts of the data diode 100. Power is provided directly from the power conversion module for a first part of the data diode 100, namely the receive portion 100a, comprising serial data transceiver 140. Power is also provided to a power isolation convertor 120.

The power isolation convertor 120 is in the form of a DC-DC convertor and is arranged to provide isolated power to the transmit portion 100b of the data diode 100, comprising serial data transceiver 160. By isolating the power to the receive 100a and transmit 100b portions, there can be no backflow of data from the receiving network to the transmitting network via the power lines or connections.

Data enters the data diode 100 at serial data input 130 on a differential pair of lines connected to the first serial data transceiver 140, which in this embodiment is an RS485 transceiver. The first transceiver 140 converts the input signal (at ±15V DC) to a lower magnitude DC signal voltage (approximately 1.2V DC), which in turn is used as the driving signal for an optocoupler 150.

The optocoupler 150 is operable to provide guaranteed data isolation between the transmitting and receiving networks, in that it physically allows only one-way communication. This is achieved by means of a single transmitter of light (emitter) and a single receiver of light (a photoreceptor), which are encapsulated within the optocoupler component. The light is not visible from the exterior of the component, since this would obviously pose a security risk.

The optocoupler 150 is chosen for convenience, since it is provided in a single physical package. However, functionally, it may be replaced by a separate optical transmitter (emitter) and receiver (detector).

The data signal leaving first transceiver 140 is used to energise the light source in the optocoupler 150, with the light thereby generated being detected by the photoreceptor, which then generates a corresponding electronic output signal. It is not physically possible for the photoreceptor to act as an emitter and vice-versa.

The output signal thereby generated is supplied to a second serial data transceiver 160, operable to produce the differential voltage necessary to drive the output 170, which is then, in turn, connected to the receiving system.

Due to the data isolation provided by the optocoupler 150 and the power isolation provided by power isolation convertor 120, electronic signals may only pass through the data diode in a single direction, which is determined by the physical configuration and installation of the data diode 100. In other words, there is no requirement to program or configure the device in any way, once installed, and the direction of data flow is determined solely by the physical connections made to the data diode 100.

The differential data leaving the data diode output 170 is substantially identical to that arriving at the data diode input 130. By substantially identical, it is meant that the signal leaving output 170 is operable within the same voltage limits as defined by the applicable standard e.g. RS485, and conveying the same information. The substantive difference is that data is physically prevented from travelling 'backwards' through the data diode 100 from the output 170 to the input 130.

Embodiments of the invention find particular use in military vehicles, where it is desirable or necessary to provide at least two distinct networks having different security classifications, which must share some information, but where contamination between the networks must be avoided.

A particular environment which can benefit from embodiments of the inventions is marine vessels of the surface and submersible type.

Since embodiments of the invention do not require any programming and include no software or firmware elements, they are able to operate without any customised configuration, beyond physically connecting them in circuit. This makes them particularly immune to hacking or phishing attacks. The physical components required are well known and tested to perform to a range of reliability requirements, resulting in a device which can be certified to operate to a range of applicable standards.

Physical connections to the data diode 100 may be provided by standard connectors or by hardwiring the incoming/outgoing connections using screw terminal or similar. The data diode 100 will normally be housed in a secure environment which will prevent or at least hinder tampering with the connections.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data diode, arranged to permit a flow of data in one direction only, from a transmitter to a receiver, comprising:
a data path, comprising an optical emitter and a photoreceptor, wherein data from the transmitter is used to energise the optical emitter to create an optical signal and the photoreceptor is arranged to generate an electrical signal in response to the optical signal, whereby the generated electrical signal is arranged to be passed to the receiver; and
first and second power supplies, whereby the first and second power supplies are isolated from each other, the first power supply is arranged to supply a receive portion of the data diode and the second power supply arranged to supply a transmit portion of the data diode.

2. The data diode of claim 1 wherein the optical emitter and photoreceptor are physically housed in a common optocoupler.

3. The data diode of claim 1 or 2 wherein the first and second power supplies are internal power supplies, each generated from a single external power supply.

4. The data diode of claim 3 wherein the first power supply is generated from a power conversion module.

5. The data diode of claim 4 wherein the power conversion module is a switching regulator operable to reduce an input voltage of the single external power supply.

6. The data diode of claim 4 or 5 wherein the second power supply is generated by passing an output of the power conversion module through a power isolation convertor.

7. The data diode of claim 6 wherein the power isolation convertor is a DC-DC convertor.

8. The data diode of any preceding claim wherein an input signal and an output signal of the data diode are differential signals.

9. The data diode of claim 7 wherein the input and output signals are in RS485 format.

10. The data diode of any preceding claim further comprising, connected to each of the optical emitter and the photoreceptor, a serial transceiver.

11. A surface or submersible vessel comprising a data diode according to any preceding claim.

12. A data diode substantially as herein described, having particular reference to the accompanying figures.
